(19) Europäisches Patentamt
European Patent Office
Office européen des brevets

(11) EP 4 707 335 A1

(12) EUROPEAN PATENT APPLICATION

(43) Date of publication:
**11.03.2026 Bulletin 2026/11**

(21) Application number: **24199386.4**

(22) Date of filing: **10.09.2024**

(51) International Patent Classification (IPC):
***C08L 69/00*** *(2006.01)* ***B29C 45/00*** *(2006.01)*
***B29D 99/00*** *(2010.01)*

(52) Cooperative Patent Classification (CPC):
(C-Sets available)
**C08L 69/00; B29C 45/0001** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **ter Horst, Sascha Jan**
  **4612 PX Bergen op Zoom (NL)**
- **van Heerbeek, Hendrikus Petrus Cornelis**
  **4612 PX Bergen op Zoom (NL)**

(74) Representative: **Modiano, Gabriella Diana et al**
**Modiano & Partners SA**
**Steinsdorfstraße 14**
**80538 München (DE)**

# (54) TRANSPARENT HIGH FLOW INJECTION MOLDABLE RESIN WITH REDUCED HEAT BUILD-UP AND IMPROVED IMPACT PROPERTIES FOR OUTDOOR USAGE

(57) Thermoplastic compositions include: a. from about 30 wt% to about 60 wt% of a polycarbonate homopolymer component; b. from about 25 wt% to about 35 wt% of a polycarbonate-siloxane copolymer; c. from about 20 wt% to about 50 wt% of an additional polycarbonate copolymer; and d. from about 0.0125 wt% to about 0.0175 wt% of a borate salt. The combined weight percent value of all components does not exceed 100 wt%, and all weight percent values are based on the total weight of the composition. A housing for an outdoor-mounted article and a method for making a housing for an outdoor-mounted article are also described.

EP 4 707 335 A1

(52) Cooperative Patent Classification (CPC): (Cont.)

C-Sets
**C08L 69/00, C08L 83/10, C08L 69/005, C08K 3/38**

## Description

### FIELD OF THE DISCLOSURE

The present disclosure relates to polycarbonate compositions, and in particular to injection-molded polycarbonate compositions suitable for outdoor applications that have improved heat build-up and impact properties.

### BACKGROUND OF THE DISCLOSURE

Thermoformed sheets utilize a low flow (high molecular weight) polycarbonate. A high flow (low molecular weight) polycarbonate may be used to make large parts by an injection molding process; unfortunately, low molecular weight polycarbonate lacks the impact performance of high molecular weight polycarbonate, making it difficult to pass IK10 impact testing requirements. The IK rating scale identifies the ability of an enclosure to resist impact energy levels measured in joules (J) in accordance with IEC 62262.

Solar polycarbonate sheets may be provided with a co-extruded UV cap-layer containing a high amount of UV absorbers (e.g., 5-10 wt%), which prevents haze build-up (improving the see-through quality) and impact loss upon outdoor weathering. The relatively high levels of UV absorbers present in the UV cap-layer cannot be applied to making injection moldable polycarbonate resins, however, because the UV absorber reduces the physical properties of the polycarbonate.

Furthermore, for the production of large quantities of applications utilizing solar polycarbonate solutions, the conventional thermoforming process of solar polycarbonate sheets is rendered less economically viable in comparison to the injection molding process.

There are no existing injection-moldable transparent resin solutions that satisfy all application requirements for solar polycarbonate sheets, such as high flow, UV stability, reduced heat-build up, and impact strength including an IK10 impact rating.

These and other shortcomings are addressed by aspects of the present disclosure.

### SUMMARY

Aspects of the disclosure relate to: thermoplastic compositions including: a. from about 30 wt% to about 60 wt% of a polycarbonate homopolymer component; b. from about 25 wt% to about 35 wt% of a polycarbonate-siloxane copolymer; c. from about 20 wt% to about 50 wt% of an additional polycarbonate copolymer; and d. from about 0.0125 wt% to about 0.0175 wt% of a borate salt. The combined weight percent value of all components does not exceed 100 wt%, and all weight percent values are based on the total weight of the composition.

Aspects of the disclosure further relate to a housing for an outdoor-mounted article, wherein the housing comprises a composition includes: a. from about 30 wt% to about 60 wt% of a polycarbonate homopolymer component; b. from about 25 wt% to about 35 wt% of a polycarbonate-siloxane copolymer; c. from about 20 wt% to about 50 wt% of an additional polycarbonate copolymer; and d. from about 0.0125 wt% to about 0.0175 wt% of a borate salt. The combined weight percent value of all components does not exceed 100 wt%, and all weight percent values are based on the total weight of the composition.

Additional aspects of the disclosure relate to methods for making a housing for an outdoor-mounted article, including: forming a mixture including a. from about 30 wt% to about 60 wt% of a polycarbonate homopolymer component, b. from about 25 wt% to about 35 wt% of a polycarbonate-siloxane copolymer, c. from about 20 wt% to about 50 wt% of an additional polycarbonate copolymer, and d. from about 0.0125 wt% to about 0.0175 wt% of a borate salt; and injection molding the housing from the mixture. The combined weight percent value of all components does not exceed 100 wt%, and all weight percent values are based on the total weight of the composition.

### DETAILED DESCRIPTION

The present disclosure relates to an injection-moldable thermoplastic composition that can be used to mold articles (e.g., outdoor housings and covers) that offer good impact, UV protection, and reduced solar heat build-up. The composition of the present disclosure offers an alternative to thermoformable solar sheets, and offers several advantages over conventional compositions and methods, including:

- Higher productivity for injection molding as compared to thermoforming process.
- Uniform thickness, solar and UV stability properties as compared to thermoformed articles that suffer from wall thickness variation, leading to varying solar absorption and UV cap-layer thickness and reduced solar protection.
- Increased design freedom of injection molded articles over thermoformed articles, allowing for sharper draft angle

designs.

To balance flow, impact and weatherability properties the present disclosure relates to thermoplastic compositions offering a novel blend of polycarbonate homopolymer, polycarbonate-siloxane copolymer, and polyestercarbonate copolymer. The compositions are injection moldable, which allows for filling large molds, and have good IK10 impact properties. In one aspect, the composition may be formed into an article such as a cover for an Automated External Defibrillator (AED). Such covers are configured for outdoor use, including long-term exposure to the sun. Heat build-up inside an AED cover should be controlled to protect the AED electronics. Additionally, ultraviolet (UV) protection is desired to prevent a reduction in impact properties and to maintain haze properties.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

## Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate-siloxane copolymer" includes mixtures of two or more polycarbonate-siloxane copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed

that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

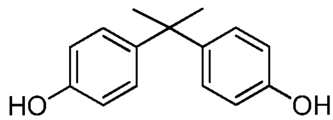

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

The present disclosure addresses the problem of making polycarbonate sheets with good solar absorption properties relating to the limited scalability of conventional thermoforming processes for making such sheets. To address this scalability problem, an injection molding process of parts (e.g., covers/housings) including polycarbonate sheets is desired.

Aspects of the disclosure relate to thermoplastic compositions including: a. from about 30 wt% to about 60 wt% of a polycarbonate homopolymer component; b. from about 25 wt% to about 35 wt% of a polycarbonate-siloxane copolymer; c. from about 20 wt% to about 50 wt% of an additional polycarbonate copolymer; and d. from about 0.0125 wt% to about 0.0175 wt% of a borate salt. The combined weight percent value of all components does not exceed 100 wt%, and all weight percent values are based on the total weight of the composition.

In some aspects the polycarbonate homopolymer component includes a linear polycarbonate, a branched polycarbonate, or a combination thereof. The polycarbonate homopolymer component may include a post-consumer recycled (PCR) polycarbonate in certain aspects.

In particular aspects the polycarbonate homopolymer component has a molecular weight (Mw) of from about 16,000 to about 21,500, wherein molecular weight is evaluated according to polycarbonate standards. In specific aspects the polycarbonate homopolymer component has a Mw of at least 16,000, or at least 16,500, or at least 17,000, or at least 18,000, or about 18,500, or at most 21,500, or at most 21,000, or at most 19,500, or at most 19,000.

In some aspects the composition includes at least 30 wt%, or at least 35 wt%, or at least 40 wt%, or at least 45 wt%, or at most 60 wt%, or at most 55 wt%, or at most 50 wt%, or at most 45 wt%, of the polycarbonate homopolymer component.

Compositions according to aspects of the disclosure include from about 25 wt% to about 35 wt% of a polycarbonate-siloxane copolymer. In some aspects the composition includes a polycarbonate-siloxane copolymer having a siloxane content of from about 4 wt% to about 10 wt%, based on the total weight of the polycarbonate-siloxane copolymer component. In further aspects the polycarbonate-siloxane copolymer has a siloxane content of from about 4-8 wt%, or from about 5 wt% to about 7 wt%. An exemplary PC-Si copolymer is transparent EXL (t-EXL), available from SABIC, which has a siloxane content of about 6 wt%.

In certain aspects the composition includes at least 25 wt%, or at least 26 wt%, or at least 27 wt%, or at least 28 wt%, or at least 29 wt%, or at least 30 wt%, or at most 35 wt%, or at most 34 wt%, or at most 33 wt%, or at most 32 wt%, or at most 31 wt%, or at most 30 wt%, of the polycarbonate-siloxane copolymer.

Compositions according to aspects of the disclosure include from about 20 wt% to about 50 wt% of an additional polycarbonate copolymer. The additional polycarbonate copolymer may include a copolyestercarbonate in some aspects. The copolyestercarbonate copolymer may include ester units of the formula

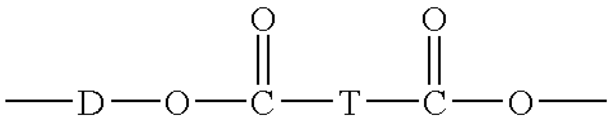

wherein D is a divalent group derived from a dihydroxy compound, and may be, for example, a $C_{2-30}$ alkylene group, a $C_{3-30}$ alicyclic group, a $C_{6-30}$ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a $C_{2-30}$ alkylene group, a $C_{6-30}$ alicyclic group, a $C_{6-30}$ alkyl aromatic group, or a $C_{6-30}$ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a $C_{2-6}$ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester unit include arylate ester units derived from the reaction product of one equivalent of an isophthalic acid derivative and/or terephthalic acid derivative with a resorcinol of the formula

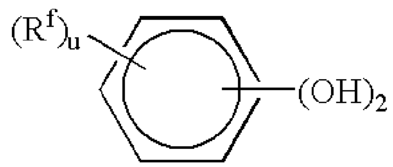

wherein each $R^f$ is independently $C_{1-12}$ alkyl, or halogen, and u is 0 to 4. It will be understood that $R^f$ is hydrogen when u is 0. Typically, the halogen can be chlorine or bromine. In an aspect, compounds in which the -OH groups are substituted meta to one another, and wherein $R^f$ and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination of isophthalate esters, terephthalate esters, and resorcinol esters. In a specific aspect, isophthalate-terephthalate-resorcinol ester units include a combination of isophthalate-resorcinol ester units and terephthalate-resorcinol ester units. In a specific aspect, where u is 0, the arylate ester units include isophthalate-terephthalate-resorcinol ester units in which the resorcinol is 1,3-dihydroxybenzene. Exemplary aromatic polyester units include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester unit is a poly(isophthalate-terephthalate-resorcinol) ester. In a particular aspect the copolyestercarbonate copolymer includes ITR units and polycarbonate units, as shown in the formula below:

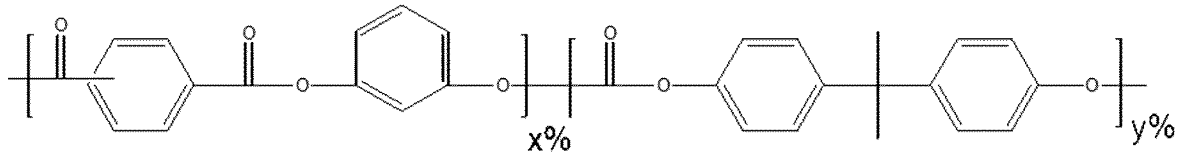

wherein x is the mole % of the ITR ester units and y is the mole % of the polycarbonate units. An exemplary copolyestercarbonate copolymer is SLX 20/80 resin, available from SABIC. SLX 20/80 includes 20 mole % ITR units and 80 mole % PC units.

In yet further aspects the copolyestercarbonate copolymer has a mole % ratio of ITR ester units to polycarbonate monomer units of from about 15:85 to about 95:5, or from about 20:80 to about 90:10, or from about 15:85 to about 25:75, or from about 18:82 to about 22:78, or about 20:80, or from about 85:15 to about 95:5, or from about 88:12 to about 92:8, or about 90:10.

In certain aspects the additional polycarbonate copolymer may include a sebacic acid/BPA PC copolymer including sebacic acid mmer units and bisphenol-A monomer units. Sebacic acid has the following structure:

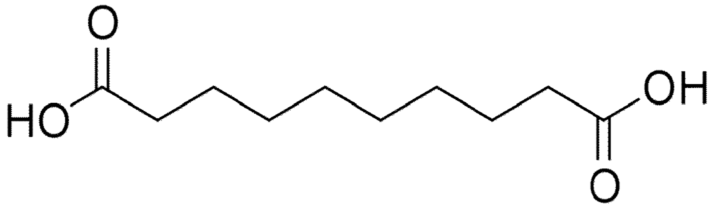

Bisphenol-A has the structure:

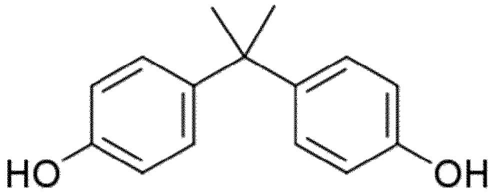

As a copolymer, the sebacic acid monomer provides the copolymer with good flow and ductility properties at a lower processing temperature, while the BPA monomer provides improved heat and modulus properties. Exemplary sebacic acid/BPA copolymers include a high molecular weight (Mw) high flow/ductile (HFD) polycarbonate, a low Mw HFD polycarbonate, or a combination thereof. In certain aspects the composition includes a polycarbonate copolymer component including from about 0.1 mol% to about 10 mol% sebacic acid monomer units and from about 90 mol% to about 99.9 mol% bisphenol-A monomer units.

In certain aspects the composition includes at least 20 wt%, or at least 22 wt%, or at least 24 wt%, or at least 25 wt%, or at least 26 wt%, or at least 28 wt%, or at least 30 wt%, or at least 32 wt%, or at least 34 wt%, or at least 36 wt%, or at least 38 wt%, or at least 40 wt%, or at most 50 wt%, or at most 48 wt%, or at most 46 wt%, or at most 44 wt%, or at most 42 wt%, or at most 40 wt%, or at most 38 wt%, or at most 36 wt%, or at most 34 wt%, or at most 32 wt%, or at most 30 wt%, or at most 28 wt%, or at most 26 wt%, or at most 25 wt%, of the at least one additional polycarbonate copolymer.

The combination of the polycarbonate homopolymer component, polycarbonate-siloxane copolymer, and additional polycarbonate copolymer in the composition provides the composition with a novel blend of flow, impact and weatherability properties. The polycarbonate homopolymer component (e.g., OQ PC having a high flow/low Mw) provides improved flow properties; the polycarbonate-siloxane copolymer provides improved impact properties; and the additional polycarbonate copolymer (e.g., SLX copolymer) provides improved weatherability properties and when formed in-situ provides a protective UV absorbing layer upon exposure to UV light, replacing the need for a UV cap layer. Additionally, the composition is injection moldable, which allows the filling of large tools and allowing the injection molded articles to satisfy IK10 impact requirements.

Compositions according to aspects of the disclosure include from about 0.0125 wt% to about 0.0175 wt% of a borate salt. The borate salt provides the composition with infrared absorption properties, which can help protect electronic components of a device such as an AED from overheating inside an outdoor housing. The borate salt may include, but is not limited to, lanthanum hexaboride ($LaB_6$), and may be in a form of a polycarbonate masterbatch. An exemplary polycarbonate masterbatch including lanthanum hexaboride is available from Sumitomo Metal Mining Company.

In specific aspects the composition includes at least 0.0125 wt%, or at least 0.0130 wt%, or at least 0.0135 wt%, or at least 0.0140 wt%, or at most 0.0175 wt%, or at most 0.0170 wt%, or at most 0.0165 wt%, or at most 0.0160 wt%, or at most 0.0155 wt%, or at most 0.0150 wt%, or at most 0.0145 wt%, of the borate salt.

In some aspects the composition includes from about 0.05 wt% to about 15 wt% of at least one additional additive. The at least one additional additive may include, but is not limited to, an antioxidant, an antistatic agent, a chain extender, a colorant, a release agent, a flow promoter, a lubricant, a plasticizer, a flame retardant, a flame retardant synergist, an impact modifier, a blowing agent, a reinforcing agent, or a combination thereof.

In certain aspects the composition includes at least 0.05 wt%, or at least 0.10 wt%, or at least 0.15 wt%, or at least 0.2 wt%, or at least 0.25 wt%, or at least 0.3 wt%, or at least 0.35 wt%, or at least 0.4 wt%, or at least 0.45 wt%, or at least 0.5 wt%, or at least 0.55 wt%, or at most 15 wt%, or at most 14 wt%, or at most 13 wt%, or at most 12 wt%, or at most 11 wt%, or

at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, of the at least one additional additive.

In specific aspects the composition includes no more than 5 wt% of an ultraviolet (UV) absorbing additive. In further aspects the composition includes no more than 4 wt%, or no more than 3 wt%, or no more than 2.5 wt%, or no more than 2 wt%, or no more than 1.5 wt%, or no more than 1.0 wt%, or no more than 0.5 wt%, of a UV absorbing additive. Compositions according to aspects of the disclosure are weatherable-for example they maintain haze or impact properties-after long-term exposure to UV light/sunlight.

Compositions according to aspects of the disclosure have good haze properties. In certain aspects the composition has a haze of from about 1% to about 5% at a thickness of 3 millimeters (mm), wherein haze is evaluated according to ISO 13468. In further aspects the composition has a haze of from 1% to 4.5%, or from 1% to 4%, or from 1% to 3.5%, or from 1% to 3%, or from 1% to 2.5%, or from 1% to 2%, at a thickness of 3 mm.

In certain aspects the composition has a notched Izod impact (NII) strength at 0 °C of at least 40 $kJ/m^2$ as evaluated in accordance with ISO 180 using a sample thickness of 3 mm. In further aspects the composition has a NII strength at 0 °C of at least 40 $kJ/m^2$, or at least 41 $kJ/m^2$, or at least 42 $kJ/m^2$, or at least 43 $kJ/m^2$, or at least 44 $kJ/m^2$, or at least 45 $kJ/m^2$, or at most 65 $kJ/m^2$, or at most 60 $kJ/m^2$, or at most 55 $kJ/m^2$, or at most 50 $kJ/m^2$, as evaluated in accordance with ISO 180 using a sample thickness of 3 mm.

In further aspects the composition has a puncture energy at 23 °C of from 90 to 100 Joules (J) as evaluated in accordance with ISO 6603. In specific aspects the composition has a puncture energy at a maximum force of from 110 to 120 J at a temperature of -30 °C as evaluated in accordance with ISO 6603.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

In specific aspects the disclosure relates to a method for making a housing for an outdoor-mounted article, including: forming a mixture including a. from about 30 wt% to about 60 wt% of a polycarbonate homopolymer component, b. from about 25 wt% to about 35 wt% of a polycarbonate-siloxane copolymer, c. from about 20 wt% to about 50 wt% of an additional polycarbonate copolymer, and d. from about 0.0125 wt% to about 0.0175 wt% of a borate salt; and injection molding the housing from the mixture. The combined weight percent value of all components does not exceed 100 wt%, and all weight percent values are based on the total weight of the composition.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects the article is a housing for an outdoor-mounted article, such as but not limited to a cover for an outdoor-mounted Automated External Defibrillator (AED) device. In further aspects, the housing does not include an ultraviolet (UV) cap layer.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

a. from about 30 wt% to about 60 wt% of a polycarbonate homopolymer component;
b. from about 25 wt% to about 35 wt% of a polycarbonate-siloxane copolymer;
c. from about 20 wt% to about 50 wt% of an additional polycarbonate copolymer; and
d. from about 0.0125 wt% to about 0.0175 wt% of a borate salt,

wherein the combined weight percent value of all components does not exceed 100 wt%, and all weight percent values are based on the total weight of the composition.

Aspect 2. The thermoplastic composition according to Aspect 1, wherein the polycarbonate homopolymer component comprises a linear polycarbonate, a branched polycarbonate, or a combination thereof.

Aspect 3. The thermoplastic composition according to Aspect 1 or 2, wherein the polycarbonate homopolymer component comprises a post-consumer recycled polycarbonate.

Aspect 4. The thermoplastic composition according to any one of Aspects 1 to 3, wherein the polycarbonate homopolymer component has a molecular weight (Mw) of from about 16,000 to about 21,500, wherein molecular weight is evaluated according to polycarbonate standards.

Aspect 5. The thermoplastic composition according to any one of Aspects 1 to 4, wherein polycarbonate-siloxane copolymer has a siloxane content of from 4 wt% to 10 wt%.

Aspect 6. The thermoplastic composition according to any one of Aspects 1 to 5, wherein the additional polycarbonate copolymer comprises isophthalate-terephthalate-resorcinol (ITR) ester units and polycarbonate units in a mole % ratio of ITR units to polycarbonate units of from about 15:85 to about 95:5.

Aspect 7. The thermoplastic composition according to Aspect 6, wherein the additional polycarbonate copolymer comprises ITR ester units and polycarbonate units in a mole % ratio of ITR units to polycarbonate units of from about 18:82 to about 22:78.

Aspect 8. The thermoplastic composition according to any one of Aspects 1 to 7, wherein the composition further comprises from about 0.05 wt% to about 15 wt% of at least one additional additive.

Aspect 9. The thermoplastic composition according to Aspect 8, wherein the at least one additional additive comprises an antioxidant, an antistatic agent, a chain extender, a colorant, a release agent, a flow promoter, a lubricant, a plasticizer, a flame retardant, a flame retardant synergist, an impact modifier, a blowing agent, a reinforcing agent, or a combination thereof.

Aspect 10. The thermoplastic composition according to any one of Aspects 1 to 9, wherein the composition comprises no more than 0.5 wt% of a UV absorbing additive.

Aspect 11. The thermoplastic composition according to any one of Aspects 1 to 10, wherein the composition has a haze of from about 1% to about 5% at a thickness of 3 millimeters (mm), wherein haze is evaluated according to ISO 13468.

Aspect 12. The thermoplastic composition according to any one of Aspects 1 to 11, wherein the composition has a notched Izod impact strength at 0 °C of at least 40 kJ/$m^2$ as evaluated in accordance with ISO 180 using a sample thickness of 3 millimeters (mm).

Aspect 13. The thermoplastic composition according to any one of Aspects 1 to 12, wherein the composition has a puncture energy at 23 °C of from 90 to 100 Joules (J) as evaluated in accordance with ISO 6603.

Aspect 14. The thermoplastic composition according to any one of Aspects 1 to 13, wherein the composition has

a puncture energy at a maximum force of from 110 to 120 J at a temperature of -30 °C as evaluated in accordance with ISO 6603.

Aspect 15. An article comprising the thermoplastic composition according to any one of Aspects 1 to 14.

Aspect 16. The article according to Aspect 15, wherein the article is injection molded.

Aspect 17. The article according to Aspect 15 or 16, wherein the article is a cover for an outdoor-mounted Automated External Defibrillator (AED) device.

Aspect 18. A housing for an outdoor-mounted article, wherein the housing comprises a composition comprising:

a. from about 30 wt% to about 60 wt% of a polycarbonate homopolymer component;
b. from about 25 wt% to about 35 wt% of a polycarbonate-siloxane copolymer;
c. from about 20 wt% to about 50 wt% of an additional polycarbonate copolymer; and
d. from about 0.0125 wt% to about 0.0175 wt% of a borate salt,

wherein the combined weight percent value of all components does not exceed 100 wt%, and all weight percent values are based on the total weight of the composition.

Aspect 19. The housing according to Aspect 18, wherein the housing is injection molded.

Aspect 20. A method for making a housing for an outdoor-mounted article, comprising:

forming a mixture comprising

a. from about 30 wt% to about 60 wt% of a polycarbonate homopolymer component,
b. from about 25 wt% to about 35 wt% of a polycarbonate-siloxane copolymer,
c. from about 20 wt% to about 50 wt% of an additional polycarbonate copolymer, and
d. from about 0.0125 wt% to about 0.0175 wt% of a borate salt; and injection molding the housing from the mixture,

wherein the combined weight percent value of all components does not exceed 100 wt%, and all weight percent values are based on the total weight of the composition.

Aspect 21. The method according to Aspect 20, wherein the polycarbonate homopolymer component comprises a linear polycarbonate, a branched polycarbonate, or a combination thereof.

Aspect 22. The method according to Aspect 20 or 21, wherein the polycarbonate homopolymer component comprises a post-consumer recycled polycarbonate.

Aspect 23. The method according to any one of Aspects 20 to 22, wherein the polycarbonate homopolymer component has a molecular weight (Mw) of from about 16,000 to about 21,500, wherein molecular weight is evaluated according to polycarbonate standards.

Aspect 24. The method according to any one of Aspects 20 to 23, wherein polycarbonate-siloxane copolymer has a siloxane content of from 4 wt% to 10 wt%.

Aspect 25. The method according to any one of Aspects 20 to 24, wherein the additional polycarbonate copolymer comprises isophthalate-terephthalate-resorcinol (ITR) ester units and polycarbonate units in a mole % ratio of ITR units to polycarbonate units of from about 15:85 to about 95:5.

Aspect 26. The method according to Aspect 25, wherein the additional polycarbonate copolymer comprises ITR ester units and polycarbonate units in a mole % ratio of ITR units to polycarbonate units of from about 18:82 to about 22:78.

Aspect 27. The method according to any one of Aspects 20 to 26, wherein the composition further comprises from about 0.05 wt% to about 15 wt% of at least one additional additive.

Aspect 28. The method according to Aspect 27, wherein the at least one additional additive comprises an antioxidant, an antistatic agent, a chain extender, a colorant, a release agent, a flow promoter, a lubricant, a plasticizer, a flame retardant, a flame retardant synergist, an impact modifier, a blowing agent, a reinforcing agent, or a combination thereof.

Aspect 29. The method according to any one of Aspects 20 to 28, wherein the composition comprises no more than 0.5 wt% of a UV absorbing additive.

Aspect 30. The method according to any one of Aspects 20 to 29, wherein the composition has a haze of from about 1% to about 5% at a thickness of 3 millimeters (mm), wherein haze is evaluated according to ISO 13468.

Aspect 31. The method according to any one of Aspects 20 to 30, wherein the composition has a notched Izod impact strength at 0 °C of at least 40 kJ/$m^2$ as evaluated in accordance with ISO 180 using a sample thickness of 3 millimeters (mm).

Aspect 32. The method according to any one of Aspects 20 to 31, wherein the composition has a puncture energy at 23 °C of from 90 to 100 Joules (J) as evaluated in accordance with ISO 6603.

Aspect 33. The method according to any one of Aspects 20 to 32, wherein the composition has a puncture energy

at a maximum force of from 110 to 120 J at a temperature of -30 °C as evaluated in accordance with ISO 6603.

Aspect 34. An article comprising the thermoplastic composition formed according to the method of any one of Aspects 20 to 33.

Aspect 35. The article according to Aspect 34, wherein the article is injection molded.

Aspect 36. The article according to Aspect 34 or 35, wherein the article is a cover for an outdoor-mounted Automated External Defibrillator (AED) device.

Aspect 37. The composition or article according to any one of Aspects 1 to 36, wherein an injection molded sample of the composition or article has an IK10 impact rating as evaluated in accordance with IEC 62262.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components recited in Table 1:

**Table 1 - Components**

| Component | Description | Source |
|---|---|---|
| PC175 | Linear PC homopolymer, medium flow, Mw ~ 22k | SABIC |
| PC115 | Optical quality (OQ) PC homopolymer, high flow, Mw ~ 18.5k | SABIC |
| PC-Si | PC-Si copolymer, 6 wt% siloxane (t-EXL) | SABIC |
| SLX 20/80 | PC copolymer including 20 mol% ITR ester units and 80 mol% PC units (ITR-PC, SLX 20/80) | SABIC |
| PC105 | Polycarbonate homopolymer, low flow, Mw ~ 30k | SABIC |
| PETS | Pentaerythritol tetrastearate, mold release | FACI S.p.A. |
| EPOX | 7-oxabicyclo[4.1.0]heptane-3-carboxylic acid,7-oxabicyclo [4.1.0]hept-3-ylmethyl ester, Epoxy stabilizer | Diacel Corporation |
| DW | Demineralized water, steam stripping agent | |
| UV | Benzotriazole, UV absorber | BASF SE |
| P-EPQ | Phosphonite stabilizer | Clariant Plastics & Coatings |
| TBPP | Tri (2,4-di-tert-butylphenyl) phosphate, stabilizer | BASF SE |
| $LaB_6$ MB | KHCS-06 Lanthanum hexaboride (borate salt) in a PC masterbatch (0.25 wt% borate salt), infrared absorber | Sumitomo Metal Mining Co., Ltd. |

Comparative and example compositions were prepared as set forth in Table 2. Compositions C2, C4 and Ex6 included 5.75 wt% of the PC-lanthanum hexaboride masterbatch:

**Table 2 - Comparative and Example Compositions**

| Component (wt%) | C1 | C2 | C3 | C4 | C5 | Ex6 |
|---|---|---|---|---|---|---|
| PC175 | 73.12 | 68.88 | | | | |
| PC115 | | | 54.41 | 48.66 | 44.41 | 38.66 |
| PC-Si | | | | | 30 | 30 |
| SLX 20/80 | | | 45 | 45 | 25 | 25 |

(continued)

| Component (wt%) | C1 | C2 | C3 | C4 | C5 | Ex6 |
|---|---|---|---|---|---|---|
| PC105 | 26.09 | 24.58 | | | | |
| PETS | 0.4 | 0.4 | 0.3 | 0.3 | 0.3 | 0.3 |
| EPOX | | | 0.03 | 0.03 | 0.03 | 0.03 |
| DW | 0.14 | 0.14 | | | | |
| UV | 0.2 | 0.2 | 0.2 | 0.2 | 0.2 | 0.2 |
| P-EPQ | | | 0.06 | 0.06 | 0.06 | 0.06 |
| TBPP | 0.05 | 0.05 | | | | |
| $LaB_6$ (from $LaB_6$ MB) | | 0.0144 | | 0.0144 | | 0.0144 |
| $LaB_6$ MB | | 5.7356 | | 5.7356 | | 5.7356 |
| **Total (wt%)** | 100 | 100 | 100 | 100 | 100 | 100 |

The compositions in Table 2 were pelletized and injection molded into samples according to conventional methods. Various properties of the compositions were evaluated. Melt volume rate (MVR) was evaluated according to ISO 1133 at 300 °C and a load of 1.2 kilograms (kg); results are reported in cubic centimeters per 10 minutes ($cm^3$/10 min). Melt viscosity (MV) was evaluated according to ISO 11443 at 290 °C at shear rates of 1000/second (1000/s) and 10000/s; results are reported in pascal-seconds (Pa·s). Notched Izod impact strength (NII) was evaluated at the indicated temperature in accordance with ISO 180 using a sample thickness of 3 millimeters (mm); results are reported in kilojoules per square meter (kJ/$m^2$). Puncture impact (multi-axial impact) properties (puncture energy and energy at maximum force) were evaluated at the indicated temperature in accordance with ISO 6603; results are reported in Joules (J). Results are provided in Table 3:

**Table 3 - Properties of Table 2 Compositions**

| Property | Unit | C1 | C2 | C3 | C4 | C5 | Ex6 |
|---|---|---|---|---|---|---|---|
| MVR 300 °C, 1.2 kg | $cm^3$/ 10min | 20 | 19 | 23 | 23 | 23 | 21 |
| Melt Viscosity (MV) 290 °C, 1000/s | Pa-s | 351 | 370 | 305 | 319 | 285 | 302 |
| Melt Viscosity (MV) 290 °C, 10000/s | Pa-s | 90 | 92 | 84 | 85 | 78 | 80 |
| NII | | | | | | | |
| 23 °C | kJ/$m^2$ | 58 | 61 | 58 | 57 | 57 | 58 |
| 10 °C | kJ/$m^2$ | 15 | 47 | 14 | 13 | 49 | 52 |
| 0 °C | kJ/$m^2$ | 12 | 11 | 11 | 11 | 40 | 45 |
| -10°C | kJ/$m^2$ | 11 | 11 | 10 | 10 | 17 | 19 |
| -20°C | kJ/$m^2$ | 10 | 10 | 10 | 10 | 15 | 16 |
| -30°C | kJ/$m^2$ | 10 | 10 | 9 | 10 | 13 | 14 |
| Puncture Energy | | | | | | | |
| 23 °C | J | 86 | 99 | 95 | 83 | 95 | 96 |
| 10 °C | J | 65 | 103 | 99 | 93 | 102 | 103 |
| 0 °C | J | 72 | 104 | 78 | 103 | 109 | 100 |
| -10 °C | J | 91 | 108 | 96 | 106 | 105 | 109 |
| -20 °C | J | 81 | 111 | 98 | 90 | 105 | 117 |
| -30 °C | J | 69 | 107 | 100 | 107 | 104 | 115 |
| Energy, max force | | | | | | | |
| 23 °C | J | 81 | 94 | 90 | 76 | 85 | 86 |

(continued)

| | | | | | | | |
|---|---|---|---|---|---|---|---|
| Energy, max force | | | | | | | |
| 10 °C | J | 60 | 98 | 94 | 84 | 89 | 89 |
| 0 °C | J | 68 | 98 | 74 | 96 | 92 | 89 |
| -10 °C | J | 85 | 99 | 87 | 98 | 91 | 93 |
| -20 °C | J | 75 | 100 | 91 | 85 | 89 | 96 |
| -30 °C | J | 64 | 96 | 88 | 97 | 91 | 96 |
| IK Rating | - | | | | | | IK10 |

Compositions C1 and C2 include conventional polycarbonate. Composition C2 further included lanthanum hexaboride in a form of a $LaB_6$ masterbatch. Addition of lanthanum hexaboride did not substantially affect N11 properties over the range of temperatures tested, although puncture impact properties were improved.

In compositions C3 and C4, some of the PC homopolymer was replaced by 45 wt% of a polycarbonate copolymer (ITR-PC). Additionally, a higher flow (lower molecular weight) PC homopolymer was used. Melt viscosity of the C3 and C4 compositions was reduced as compared to C1 and C2. N11 properties were similar to the C1 and C2 compositions. Puncture impact properties were somewhat improved as compared to C1 over the range of temperatures tested.

In compositions C5 and Ex6, the TTR-PC content was reduced and 30 wt% of an additional polycarbonate copolymer (PC-Si) was added. Melt viscosity of compositions C5 and Ex6 was further reduced compared to C1-C4, indicating better suitability for injection molding applications. The impact (notched Izod impact) properties were the most improved of all compositions, particularly at low temperatures.

The IK rating of the sample injection molded from the Ex6 composition was evaluated against a comparative commercial solution. The IK rating scale identifies the ability of an enclosure to resist impact energy levels measured in joules (J) in accordance with IEC 62262. To achieve an IK10 rating, the sample must resist 20 J of impact without failing, which is equivalent to an impact of a 5 kilogram (kg) mass dropped from 400 millimeters (mm) above the impacted surface.

The comparative composition (C6) included a high Mw (low flow) polycarbonate and an IR-blocking additive. The C6 composition was co-extruded with a UV blocking cap layer under low shear. The resultant twin-layer sheet was thermoformed-also under low-shear conditions-into the article for the application. IK data for these articles is provided in Table 4:

**Table 4 - IK Test Data**

| Composition | Temperature (°C) | Force (N) | Energy (J) | Displacement (mm) | Failure (Y/N) |
|---|---|---|---|---|---|
| E6 (Injection molded) | -25 | 1376 | 20.88 | 20.56 | N |
| | | 1377 | 20.94 | 21.78 | N |
| | 0 | 1352 | 20.96 | 22.08 | N |
| | 23 | 1191 | 21.07 | 24.27 | N |
| | | 1279 | 20.95 | 21.93 | N |
| C6 (Thermoformed) | -25 | 1354 | 21.11 | 25.15 | N |
| | | 1347 | 20.88 | 20.55 | N |
| | 0 | 1193 | 21.17 | 26.24 | N |
| | 23 | 1151 | 21.03 | 23.56 | N |
| | | 1188 | 21.02 | 23.42 | N |

In Table 4, Force is reported in Newtons (N). As shown, both articles were subjected to impact energy of greater than 20 Joules over a range of temperatures (-25 °C, 0 °C and 23 °C). Neither of the samples failed, indicating that they achieved an IK10 impact rating. This demonstrates that the composition according to aspects of the disclosure (Ex6) provides a weatherable solution which processes well (i.e., is injection moldable) and that has sufficient impact properties to satisfy the requirements for outdoor use.

Comparative compositions C1-C5 were not evaluated for their IK properties, but at least compositions C1-C4 would not be expected to achieve an IK10 rating.

Example composition Ex6 included PC homopolymer, a polycarbonate-siloxane copolymer, a polyester-carbonate copolymer, and a borate salt and had a good balance of flow, impact, heat build-up, and weatherability properties. The flow properties of composition Ex6 make it suitable for larger component injection molded applications, providing the potential to eliminate the conventional need to thermoform such articles from UV cap-layer protected near-infrared absorbing solar sheets.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a. from about 30 wt% to about 60 wt% of a polycarbonate homopolymer component;
b. from about 25 wt% to about 35 wt% of a polycarbonate-siloxane copolymer;
c. from about 20 wt% to about 50 wt% of an additional polycarbonate copolymer; and
d. from about 0.0125 wt% to about 0.0175 wt% of a borate salt,

wherein the combined weight percent value of all components does not exceed 100 wt%, and all weight percent values are based on the total weight of the composition.

**2.** The thermoplastic composition according to claim 1, wherein the polycarbonate homopolymer component comprises a linear polycarbonate, a branched polycarbonate, or a combination thereof.

**3.** The thermoplastic composition according to claim 1 or 2, wherein the polycarbonate homopolymer component has a molecular weight (Mw) of from about 16,000 to about 21,500, wherein molecular weight is evaluated according to polycarbonate standards.

**4.** The thermoplastic composition according to any one of claims 1 to 3, wherein polycarbonate-siloxane copolymer has a siloxane content of from 4 wt% to 10 wt%.

**5.** The thermoplastic composition according to any one of claims 1 to 4, wherein the additional polycarbonate copolymer comprises isophthalate-terephthalate-resorcinol (ITR) ester units and polycarbonate units in a mole % ratio of ITR units to polycarbonate units of from about 15:85 to about 95:5.

**6.** The thermoplastic composition according to claim 5, wherein the additional polycarbonate copolymer comprises ITR ester units and polycarbonate units in a mole % ratio of ITR units to polycarbonate units of from about 18:82 to about 22:78.

**7.** The thermoplastic composition according to any one of claims 1 to 6, wherein the composition further comprises from about 0.05 wt% to about 15 wt% of at least one additional additive, wherein the at least one additional additive comprises an antioxidant, an antistatic agent, a chain extender, a colorant, a release agent, a flow promoter, a lubricant, a plasticizer, a flame retardant, a flame retardant synergist, an impact modifier, a blowing agent, a reinforcing agent, or a combination thereof.

**8.** The thermoplastic composition according to any one of claims 1 to 7, wherein the composition has a haze of from about 1% to about 5% at a thickness of 3 millimeters (mm), wherein haze is evaluated according to ISO 13468.

**9.** The thermoplastic composition according to any one of claims 1 to 8, wherein the composition has a notched Izod impact strength at 0 °C of at least 40 kJ/$m^2$ as evaluated in accordance with ISO 180 using a sample thickness of 3 millimeters (mm).

**10.** The thermoplastic composition according to any one of claims 1 to 9, wherein the composition has a puncture energy at 23 °C of from 90 to 100 Joules (J) as evaluated in accordance with ISO 6603, or a puncture energy at a maximum force of from 110 to 120 J at a temperature of -30 °C as evaluated in accordance with ISO 6603.

**11.** The thermoplastic composition according to any one of claims 1 to 10, wherein an injection molded sample of the composition has an IK10 impact rating as evaluated in accordance with IEC 62262.

**12.** An article comprising the thermoplastic composition according to any one of claims 1 to 11, wherein the article is an injection molded cover for an outdoor-mounted Automated External Defibrillator (AED) device.

**13.** A housing for an outdoor-mounted article, wherein the housing comprises a composition comprising:

a. from about 30 wt% to about 60 wt% of a polycarbonate homopolymer component;
b. from about 25 wt% to about 35 wt% of a polycarbonate-siloxane copolymer;
c. from about 20 wt% to about 50 wt% of an additional polycarbonate copolymer; and
d. from about 0.0125 wt% to about 0.0175 wt% of a borate salt,

wherein the combined weight percent value of all components does not exceed 100 wt%, and all weight percent values are based on the total weight of the composition.

**14.** The housing according to claim 13, wherein the housing is injection molded.

**15.** A method for making a housing for an outdoor-mounted article, comprising:

forming a mixture comprising

a. from about 30 wt% to about 60 wt% of a polycarbonate homopolymer component,
b. from about 25 wt% to about 35 wt% of a polycarbonate-siloxane copolymer,
c. from about 20 wt% to about 50 wt% of an additional polycarbonate copolymer, and
d. from about 0.0125 wt% to about 0.0175 wt% of a borate salt; and

injection molding the housing from the mixture,
wherein the combined weight percent value of all components does not exceed 100 wt%, and all weight percent values are based on the total weight of the composition.

Europäisches Patentamt
European Patent Office
Office européen des brevets

# EUROPEAN SEARCH REPORT

Application Number
EP 24 19 9386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/284391 A1 (VAN DE WETERING KARIN [NL] ET AL) 19 September 2019 (2019-09-19) * paragraph [0046] - paragraph [0050]; examples 20, 49-53; tables 6, 11 * | 1-15 | INV. C08L69/00 B29C45/00 B29D99/00 |
| A | US 10 738 227 B2 (SABIC GLOBAL TECHNOLOGIES BV [NL]) 11 August 2020 (2020-08-11) * example 5.4; table 6 * | 1-15 | |
| A | US 7 258 923 B2 (GEN ELECTRIC [US]) 21 August 2007 (2007-08-21) * example 1; table 2 * | 1-15 | |
| A | US 2017/044365 A1 (VAN DE WETERING KARIN IRENE [NL] ET AL) 16 February 2017 (2017-02-16) * example 12; table 6B * | 1-15 | |
| A | CN 105 778 460 A (SUZHOU TIANQING ELECTRONIC COMMUNICATION CO LTD) 20 July 2016 (2016-07-20) * claims 1-3 * | 1-15 | TECHNICAL FIELDS SEARCHED (IPC): C08L B32B B29C B29D |

The present search report has been drawn up for all claims

1

| Place of search | Date of completion of the search | Examiner |
|---|---|---|
| The Hague | 19 February 2025 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 19 9386

This annex lists the patent family members relating to the patent documents cited in the above-mentioned European search report. The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| US 2019284391 A1 | 19-09-2019 | CN 109153844 A | 04-01-2019 |
| | | EP 3464468 A1 | 10-04-2019 |
| | | US 2019284391 A1 | 19-09-2019 |
| | | WO 2017203480 A1 | 30-11-2017 |
| US 10738227 B2 | 11-08-2020 | CN 109415557 A | 01-03-2019 |
| | | EP 3469024 A1 | 17-04-2019 |
| | | KR 20190010878 A | 31-01-2019 |
| | | KR 20200078680 A | 01-07-2020 |
| | | US 2019309205 A1 | 10-10-2019 |
| | | WO 2017216678 A1 | 21-12-2017 |
| US 7258923 B2 | 21-08-2007 | CN 1623772 A | 08-06-2005 |
| | | CN 102145559 A | 10-08-2011 |
| | | EP 1529632 A1 | 11-05-2005 |
| | | EP 2202063 A2 | 30-06-2010 |
| | | ES 2395338 T3 | 12-02-2013 |
| | | JP 4137785 B2 | 20-08-2008 |
| | | JP 2005132089 A | 26-05-2005 |
| | | JP 2007055262 A | 08-03-2007 |
| | | KR 20050041825 A | 04-05-2005 |
| | | KR 20070034550 A | 28-03-2007 |
| | | TW 200514691 A | 01-05-2005 |
| | | US 2005095433 A1 | 05-05-2005 |
| US 2017044365 A1 | 16-02-2017 | CN 106661316 A | 10-05-2017 |
| | | EP 3137550 A1 | 08-03-2017 |
| | | US 2017044365 A1 | 16-02-2017 |
| | | WO 2015166381 A1 | 05-11-2015 |
| CN 105778460 A | 20-07-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7